# EUROPEAN PATENT APPLICATION

(11) **EP 2 248 569 A1**
(43) Date of publication of application: **10.11.2010**
(21) Application number: 09159556.1
(22) Date of filing: 06.05.2009
(51) Int. Cl.: B01D 9/00

(54) **Wash column**

(71) Applicant: Nederlandse Organisatie voor Toegepast -Natuurwetenschappelijk Onderzoek TNO, 2628 VK Delft (NL)
(72) Inventor: Huisjes, Piet, 7441 HK Nijverdal (NL); Nienoord, Michiel, 2594 AR Den Haag (NL); van der Meer, Johannes, 3632 EW Loenen aan de Vecht (NL); Verdoes, Dirk, 7328 VE Apeldoorn (NL)
(74) Representative: Hatzmann, Martin

(57) **Abstract**

A wash column for processing a suspension of solid particles in a liquid comprising a bed forming chamber in which a packed bed of solid particles can be formed, filtrate extraction means for extracting liquid from the suspension as to form the packed bed of solid particles in the bed forming chamber, and a suspension supply line for supplying the suspension directly to an end of the bed forming chamber, wherein the suspension supply line ends in the bed forming chamber.

## Description

The invention relates to a wash column and a method for processing a suspension in a wash column.

A wash column is generally known for processing a suspension of solid particles in a liquid. A wash column can also be used to separate organic crystals from a suspension in an impure melt.

Generally, in a wash column a suspension comprising e.g. a melt with solid particles therein (unmelted or crystallized) is passed through a wash column in order to separate the relatively pure solid particles from the liquid fraction (filtrate or mother liquor). The wash column contains one or more filters, each of which is included in a separate filter pipe which extends in the longitudinal direction through the interior of the wash column, while the suspension is supplied at one end of the column and moves along the filter pipes in the direction of the other end of the column. The mother liquor passes the filters and thus ends up in the filter pipes to be discharged. As via the filters, mother liquor is extracted from the suspension, a porous bed of particles is formed in the wash column. At the other end of the column, means are present for disintegrating or breaking up the bed of particles formed. The discharged solid (crystalline) material is melted and a portion of this melt is fed to the particle bed as washing liquid, in order to wash the particles in their own melt. The wash column can also be used to filter solid (crystalline) material from an (aqueous) suspension and to transfer the filtered solid material to a (saturated) solvent.

WO 03/041833 discloses a wash column comprising a suspension division chamber placed above a filtrate collecting chamber. In the suspension distribution chamber a suspension supply line ends. The filtrate is collected in the filtrate collecting chamber. The suspension distribution chamber comprises a distribution cone or distribution plates for distributing the suspension approximately equal over the cross-section of the wash column. To supply the suspension to the chamber of the wash column where the packed bed is formed, a plurality of pipes cross the filtrate collecting chamber to connect the suspension distribution chamber to the bed forming chamber.

A drawback of this wash column arrangement is that it is relatively difficult to feed the suspension in an approximately even distribution over the cross-section of the bed forming chamber between the plurality of filter pipes. Also, solid and/or crystalline suspension may settle and/or may form a crust on the bottom plate of the suspension distribution chamber for example, thereby resulting in a loss of suspension and/or making an approximately even distribution of the suspension more difficult.

An object of the invention is to provide a suspension supply that obviates at least one of the above mentioned draw backs.

Thereto, the invention provides a wash column for processing a suspension of solid particles in a liquid comprising a bed forming chamber in which a packed bed of solid particles can be formed, filtrate extraction means for extracting liquid from the suspension as to form the packed bed of solid particles in the bed forming chamber, and a suspension supply line for supplying the suspension directly to an end of the bed forming chamber, wherein the suspension supply line ends in the bed forming chamber.

'Suspension' is understood to mean a suspension of solid particles in a liquid, such as for instance a crystal slurry (i.e. a slurry of crystals in a melt or in a saturated solvent) or a liquid flow having solid particles suspended therein which comprise a component to be extracted (for instance seeds, such as calendula seed in an extractant, such as hexane) or a liquid flow having solid particles suspended therein which may be transferred into an other liquid. The filtrate extraction means may comprise filters retaining solid particles, but permeable for liquid, such that the liquid may be extracted from the suspension and the solid particles may remain in the bed forming chamber as to form a packed bed of solid particles.

The movement of the bed can be effected by, for instance, hydraulic pressure.

By providing a suspension supply line that ends directly in the bed forming chamber, suspension supply means to the bed forming chamber may be relatively simple and compact. Complex arrangements, such as a suspension distribution chamber or a suspension stirring chamber may be omitted. Due to the pressure and/or the speed with which the suspension may be supplied to the bed forming chamber, the flow of the suspension may be turbulent and may be spread approximately evenly over the cross-section of the bed forming chamber to form a bed with an approximately level upper layer. The suspension supply line ends at one end of the bed forming chamber upstream of the bed to be formed, in particular the suspension supply line ends in the bed forming chamber between the bed and an end wall of the bed forming chamber.

By providing a filtrate collecting chamber for collecting the liquid extracted from the suspension through which the suspension supply line crosses to end in the bed forming chamber, a compact wash column may be obtained. The filtrate collecting chamber and the suspension supply line may then be provided at the same end of the bed forming chamber, so a relatively compact wash column may be obtained.

By providing a distribution element at the end of the supply line, the suspension flowing out of the supply line may be spreaded further in the bed forming chamber, and distribution of the suspension over the cross-section of the bed forming chamber may be more reproducible. The additional distribution element may be applied for example, when the suspension flowing out of the supply line may be laminar, or when the diameter of the bed forming chamber is relatively large, or when there are relatively many filtrate extraction pipes. The distribution element may for example be a plate element placed transverse to the flow direction of the suspension at the end of the suspension supply line, or may be a spray head for spraying the suspension axially and/or radially in the bed forming chamber.

By positioning the end of the supply line approximately centrally in the bed forming chamber, the suspension may be spread over approximately the entire cross-section of the bed forming chamber such that also suspension may be spread near the wall of the bed forming chamber and the upper layer of the bed of suspension may be approximately level.

By providing one supply line over approximately 0,25 m² to 1 m² diameter of the bed forming chamber, it may suffice to provide one or relatively few suspension supply lines to the bed forming chamber. By providing few suspension supply lines, the wash column may be manufactured more cost effective, also for larger diameters of the bed forming chamber.

At an other end of the bed forming chamber, opposite the suspension supply line, the packed bed of solid particles may be disintegrated by for example a rotating knife, or may be continuously disintegrated under the influence of the impulse of liquid extracted from the suspension and supplied to the bed forming chamber for washing the packed bed.

By providing a dummy pipe supported by the suspension supply line, forming of a packed bed may be prevented at the position of the dummy pipe. The dummy pipe may extend longitudinally over the height of the bed forming chamber between the end of the suspension supply line at one end of the bed forming chamber and the opposite other end of the bed forming chamber. When the dummy pipe and/or the suspension supply is placed approximately in the centre of the bed forming chamber, a rotating knife may be applied to disintegrate the packed bed.

By providing a plurality of filter pipes extending over the height of the bed forming chamber arranged approximately parallel to each other, liquid may be extracted from the suspension to form a packed bed of solid particles at different positions in the bed forming chamber.

Further advantageous embodiments are represented in the subclaims.

The invention further relates to a method for processing a suspension of solid particles.

The invention will further be elucidated on the basis of an exemplary embodiment which is represented in a drawing. The exemplary embodiment is given by way of non-limitative illustration of the invention.

In the drawing:
Fig. 1 shows a schematic view of an embodiment of a wash column according to the invention;
Fig. 2 shows a schematic view of a second embodiment of a wash column according to the invention;
Fig. 3 shows a schematic view of a third embodiment of a wash column according to the invention;
Fig. 4 shows a schematic view of a fourth embodiment of a wash column according to the invention;
Fig. 5 shows a schematic view of a fifth embodiment of a wash column according to the invention;
Fig. 6 shows a schematic view of a sixth embodiment of a wash column according to the invention;
Fig. 7 shows a schematic view of a seventh embodiment of a wash column according to the invention; and
Fig. 8 shows a schematic view of an eighth embodiment of a wash column according to the invention.

It is noted that the figures are only schematic representations of embodiments of the invention that are given by way of non-limiting example. In the figures, the same or corresponding parts are designated with the same reference numerals.

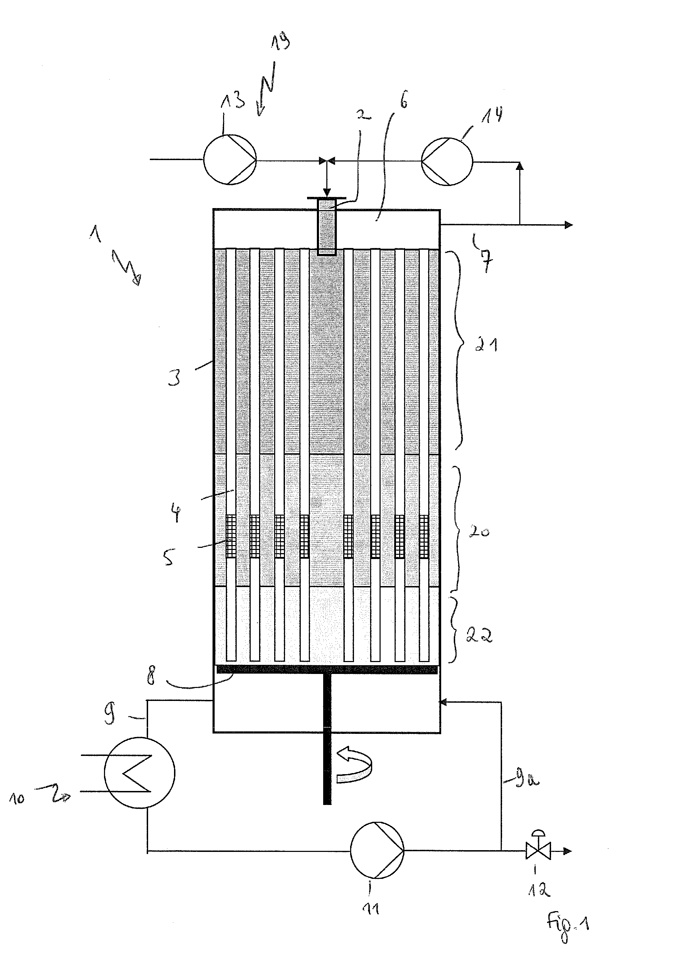

In Fig. 1 a wash column 1 is shown to which suspension of solid particles in a liquid, comprising e.g. a melt and solid particles, is fed via the suspension supply means 19, comprising the suspension supply line 2. The wash column 1 comprises a bed forming chamber 3 in which a packed bed of solid particles can be formed. The suspension is supplied directly to the bed forming chamber 3 via the suspension supply line 2. The suspension supply line 2 ends at one end of the wash column 1 in the bed forming chamber 3. In this embodiment, the suspension is fed to the bed forming chamber 3 at an upper end thereof and then flows downwards in a suspension zone 21.

In this embodiment, the wash column 1 comprises a plurality of filter pipes 4 to extract liquid from the suspension. Each filter pipe 4 comprises a filter 5. In the region of the filter 5, the liquid fraction (mother liquor) from the suspension flows into the pipes 4. The solid particles of the suspension cannot pass the filters 5 and remain in the bed forming chamber 3 to form a packed bed of solid particles in the concentration/thickening zone 20.

The filter pipes 4 extend over the height of the bed forming chamber 3 and are arranged approximately parallel to each other. At the upper end of the bed forming chamber 3, a filtrate collecting chamber 6 is provided in which the filter pipes 4 end. Liquid extracted from the suspension via the filters 5 is collected in the filtrate collecting chamber 6. The pressure in the filtrate collecting chamber 6 is lower than the pressure in the bed forming chamber 3, thus the liquid may be extracted from the suspension and may flow then upwards in the filter pipes 4 towards the filtrate collecting chamber 6. The filtrate thus collected is discharged via discharge line 7. Part of the filtrate can be fed via pump 14 and the suspension supply line 2 again to the bed forming chamber. In this embodiment, the suspension is pressurized by a pump 13 and fed to the bed forming chamber 3 under pressure, such that the pressure in the bed forming chamber 3 is larger than the pressure in the filtrate collecting chamber 6. Here, the suspension supply means 19 comprise the pump 13 and the suspension supply line 2.

The wash column 1 may also comprise less filter pipes, or more filter pipes, or may even comprise no filter pipes. When no filter pipes are provided in the wash column 1, the filtrate extraction means and/or filtrate collecting chamber may be provided at the wall of the bed forming chamber to extract and/or collect liquid from the suspension, e.g. because the pressure in the filtrate extraction means is lower than the pressure in the bed forming chamber 3.

In this embodiment, the packed bed of solid particles is disintegrated by means of a rotating knife 8 at the lower end of the wash column 1. The knife 8 scrapes off particles of the packed bed which may then pass through adjacent slots or other types of openings to allow the scraped off particles to pass through the knife 8. The scraped off solid particles are in this embodiment transported via a line 9 to a melter 10 with circulating melt. Pump 11 circulates the melt via line 9a. The purified melt is taken via valve 12 from the wash column 1. The pressure at the discharge side of the wash column 1 is set with valve 12 in such a way that a small fraction of the purified melt is forced into the packed bed of particles. The melt forced to the lower end of the bed forming chamber 3 is a washing liquid that serves to wash the solid particles in a washing zone 22, thus preventing undesired constituents of the melt from seeping through the lower end of the bed forming chamber 3.

In this embodiment, the suspension supply line 2 ends approximately centrally in the bed forming chamber 3. Due to the pressure and/or the speed with which the suspension is fed to the bed forming chamber 3, the suspension is turbulent and is spread over approximately the entire cross-section of the bed forming chamber 3, thus allowing forming a bed with an approximately level upper layer. Despite a plurality of filter pipes 4 and only one suspension supply line 2 to the bed forming chamber 3, the suspension is distributed approximately evenly over the bed forming chamber 3 and an approximately even upper layer of the bed can be formed.

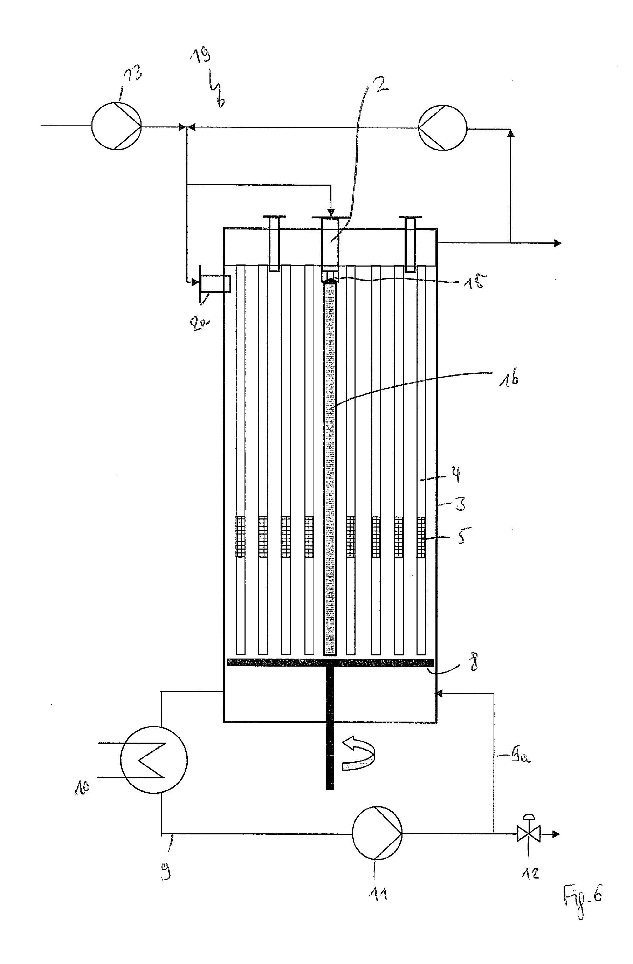

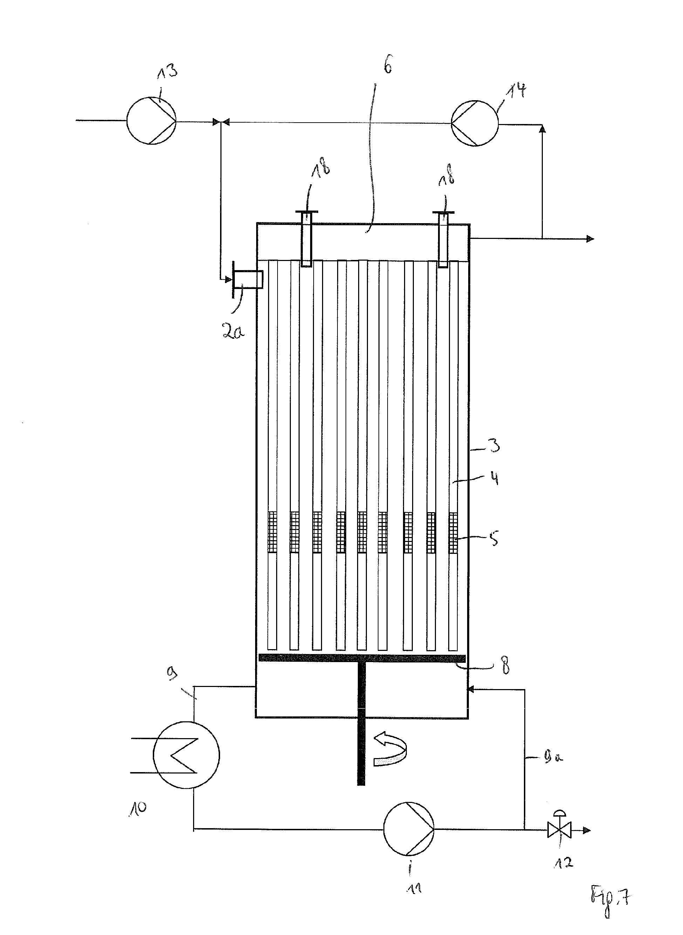

Also, only one suspension supply 2 suffices for a wash column with relatively large diameters, e.g. with a cross-section of approximately 0,25 m² to 1 m². More than one suspension supply line 2 may end in the bed forming chamber, such as for example shown in Fig. 6. Fig. 6 shows a wash column 1 with a suspension supply line 2a that goes through the wall of the bed forming chamber 3. Preferably, the suspension supply line 2a may end at the wall of the bed forming chamber 3, preferably upstream of the bed. Also, the suspension supply line 2a may end in the bed forming chamber 3 at the upper end thereof through the side wall only, as e.g shown in Fig. 7. In this embodiment, the suspension supply 2a may extend somewhat in the bed forming chamber 3 since the bed is mainly formed below the suspension supply line 2a. In an embodiment, the suspension supply line 2, 2a ends at one end of the bed forming chamber 3, upstream of the bed to be formed. The suspension supply line 2, 2a thus ends between the bed and an end wall of the bed forming chamber 3. When the bed flows downward, the suspension supply line 2, 2a ends above the bed in the bed forming chamber 3.

In the embodiment shown in Fig. 1, the suspension supply line 2 crosses the filtrate collecting chamber 6. Because only one, or a limited number of suspension supply lines 2 is provided, the disturbance of the filtrate collecting chamber 6 may be minimized. The filtrate collecting chamber 6 may be provided with stiffening means that are adapted for the filtrate collecting chamber 6 for stiffening the filtrate collecting chamber 6 against the pressure difference with the bed forming chamber 3.

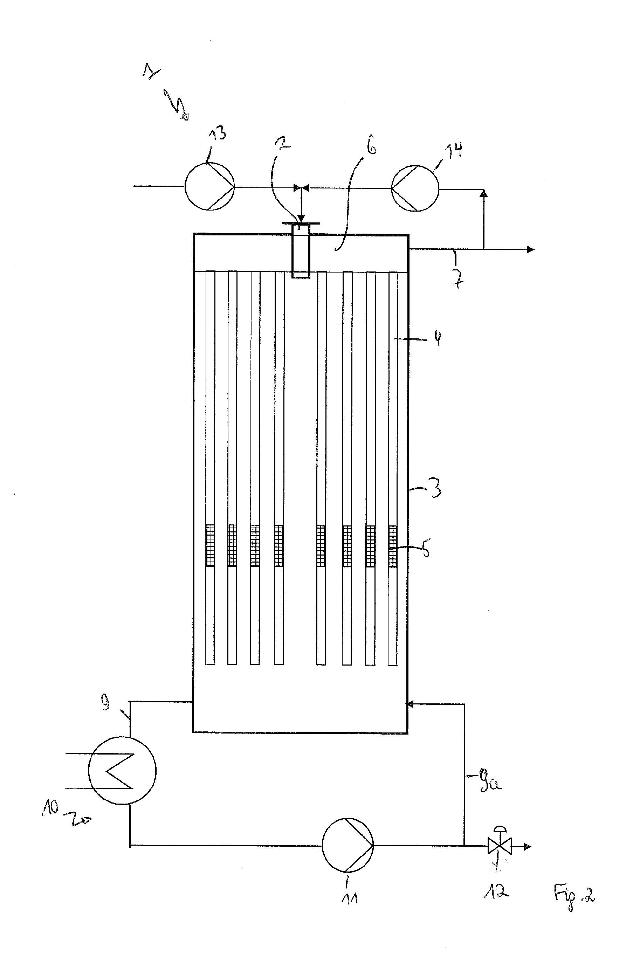

Fig. 2 shows a second embodiment of the wash column 1 according to the invention. Disintegrating the packed bed is achieved by transmitting the impulse from the washing liquid to the packed bed, supplied to the lower end of the bed forming chamber 3 via line 9a. Under the influence of the impulse of the washing liquid the bed is detached, such that solid particles from the bed are incorporated in the washing liquid. Mechanical disintegration means, such as a rotating knife, may thus be omitted. The pure product is thus obtained as a discharge flow of the recirculating washing liquid.

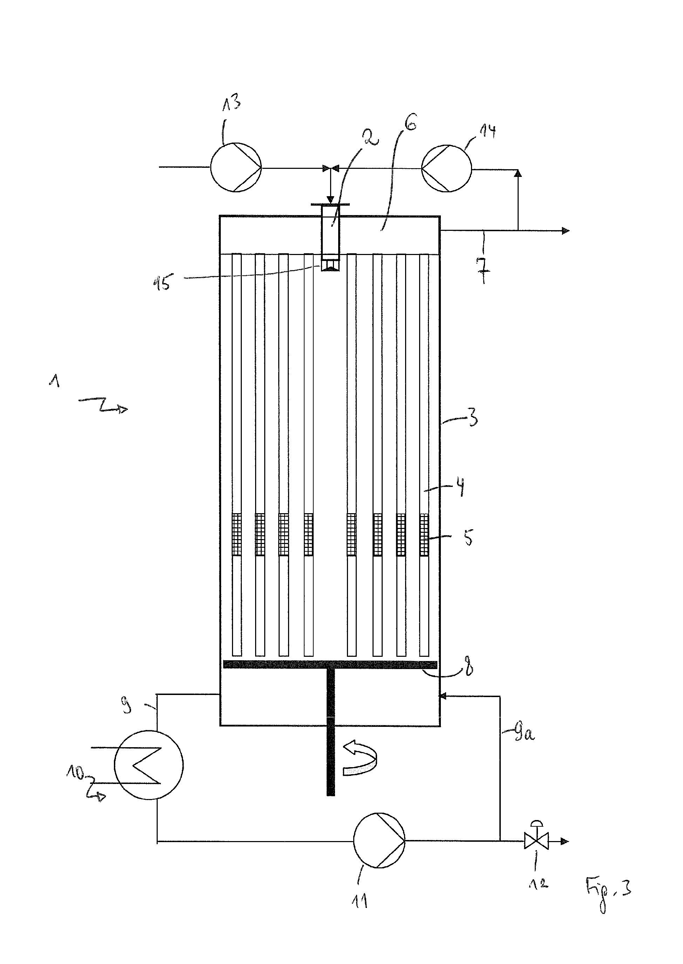

Fig. 3 shows a third embodiment of the wash column 1 according to the invention. The suspension supply line 2 comprises a distribution element 15 for further spreading the suspension flowing out of the suspension supply line. Via the distribution element 15, the suspension is fed to the bed forming chamber 3 radially as to reach also the outer wall of the bed forming chamber 3. In particular, for a bed forming chamber 3 with a relatively large diameter, spreading the suspension radially may be advantageous, because the range of the spreaded suspension may increase due to the distribution element 15. In this example, the distribution element is provided as an end piece 15 on the suspension supply line 2 with radial openings to spread the suspension radially in the bed forming chamber 3. The distribution element may also be a plate element placed transversely to the flow direction in the output flow of the suspension. Also, the distribution element as end piece may have radial and axial openings.

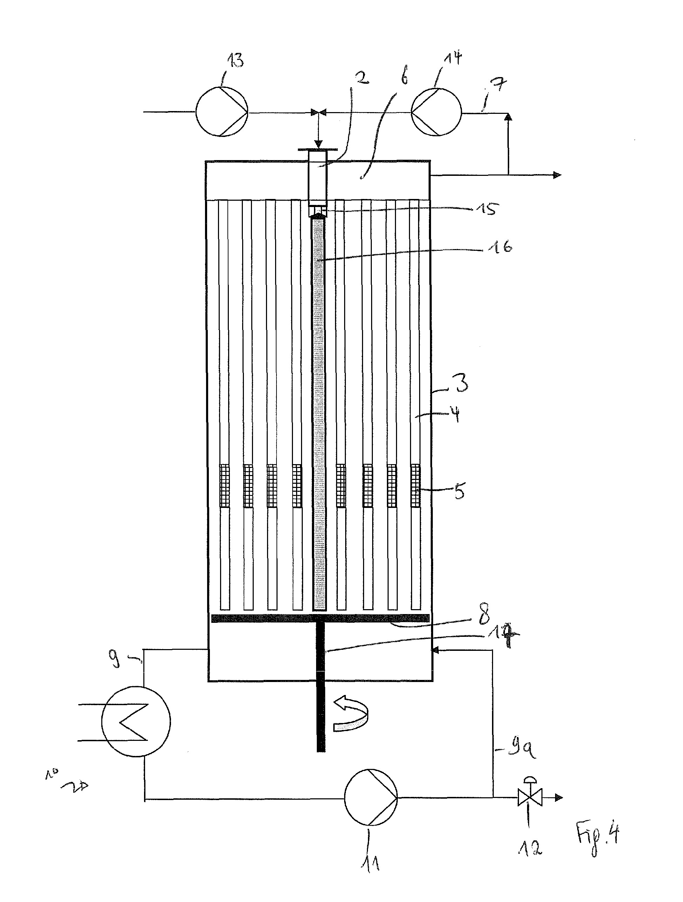

As shown in Fig. 4, under the suspension distribution element 15, a dummy pipe 16 may be placed to prevent forming of the bed thereat. Rotating knifes 8 that are centrally supported onto a shaft 17 may not be able to disintegrate the bed in the middle at the position of the shaft 17. To prevent a bed being formed at the position where the rotating knife 8 cannot disintegrate the bed, a dummy pipe 16 may be placed under the suspension supply line 2.

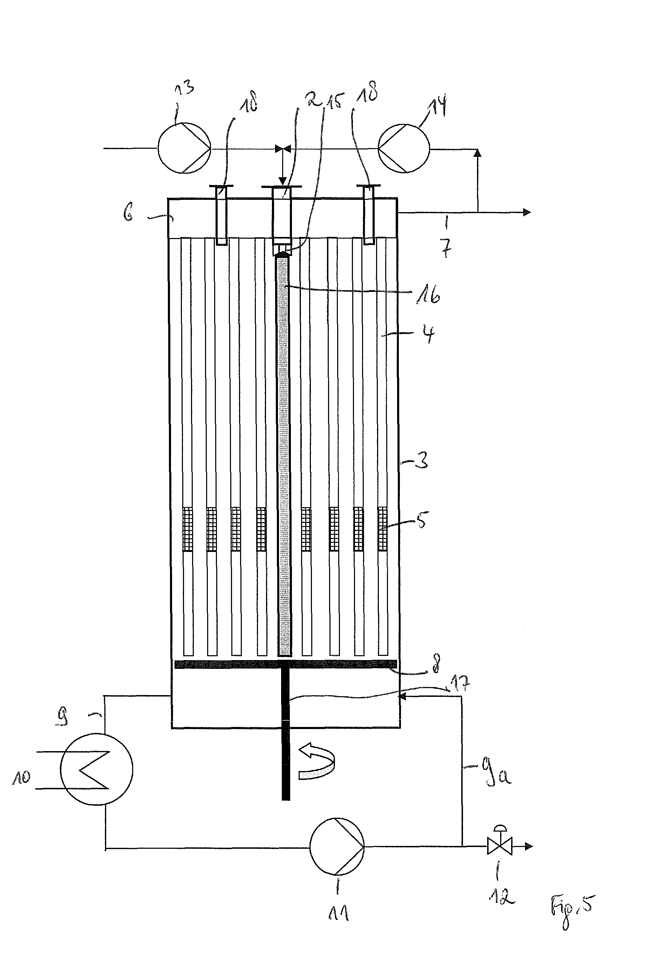

A fifth embodiment of the wash column according to the invention is shown in Fig. 5. Fig. 5 shows additionally ports for instrumentation 18 that cross the filtrate collecting chamber 6. Since only the suspension supply line 2 crosses the filtrate collecting chamber 6, there is sufficient space left for ports for instrumentation 18 that cross the filtrate collecting chamber 6 and that may be positioned relatively optimal between the filtrate pipes 4. Since instruments brought into the column 3 through the ports for instrumentation 18 are parallel to the flow of the bed, these instruments may form no blockage to the flow of the bed. The ports for instrumentation 18 may be used to accommodate instruments for measuring for example temperature and/or pressure and/or speed and/or height of the bed.

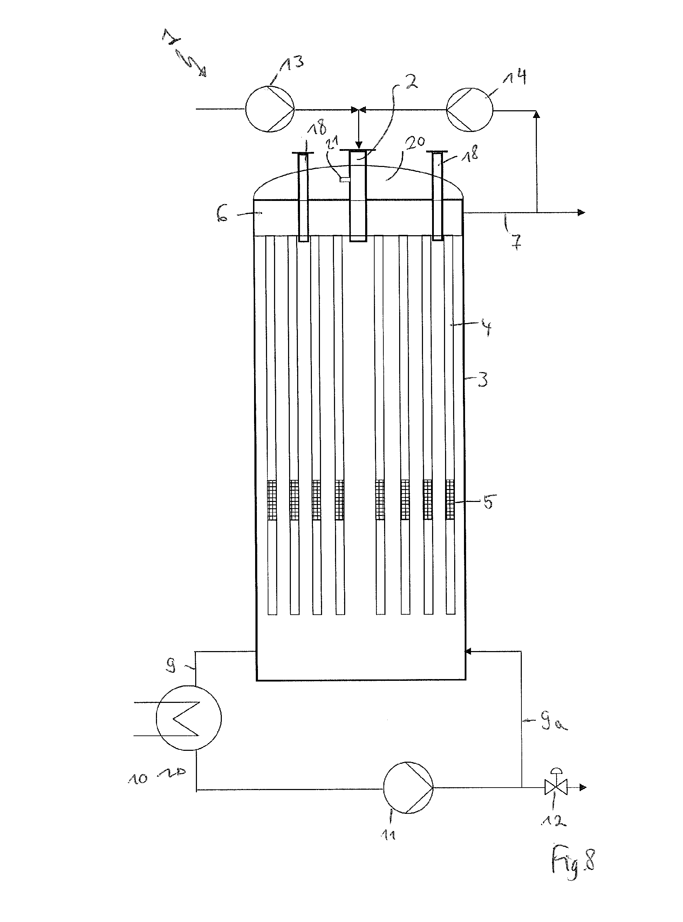

Fig. 8 shows another embodiment of a wash column 1 according to the invention. A single suspension supply line 2 is provided that crosses the filtrate collecting chamber 6. Also, two instrumentation pipes 18 are provided. In this embodiment, the wash column 1 is provided with a pressure chamber 20 that is located above the filtrate collecting chamber 6. The suspension supply line 2 and the instrumentation pipes 18 cross the pressure chamber 20 also. Preferably, the pressure in the pressure chamber 20 is approximately equal to the pressure in the bed forming chamber 3. By providing an approximately equal pressure above and below the filtrate collecting chamber 6, stiffening of the filtrate collecting chamber 6 may become easier. The filtrate collecting chamber 6 is subject to a lower pressure than the pressure in the bed forming chamber 3 and/or the pressure chamber 20. The pressure chamber 20 may be provided with a spherical end to accommodate the relatively high pressure, as shown in Fig. 8. Also, the top and/or bottom wall of the filtrate collecting chamber 6 may be spherical and/or concave to more easily accommodate the pressure difference between the filtrate collecting chamber 6 and the bed forming chamber 3 and/or pressure chamber 20.

The pressure in the pressure chamber 20 may be equal to the pressure in the bed forming chamber 3, for example by providing a vent 21 in the suspension supply line 2, as shown in Fig. 8. The pressure chamber 20 and the bed forming chamber 3 are then in connection to each other and are thus at the same pressure. Alternatively, the pressure chamber 20 may be closed and may be filled with a pressurized gas and/or liquid.

Many variants will be apparent to the person skilled in the art and are understood to be comprised within the scope of the invention as defined in the following claims.

## Claims

1. A wash column for processing a suspension of solid particles in a liquid comprising
a bed forming chamber in which a packed bed of solid particles can be formed,
filtrate extraction means for extracting liquid from the suspension as to form the packed bed of solid particles in the bed forming chamber, and
a suspension supply line for supplying the suspension directly to an end of the bed forming chamber, wherein the suspension supply line ends in the bed forming chamber.

2. Wash column according to claim 1, wherein the filtrate extraction means comprise a filtrate collecting chamber for collecting the liquid extracted from the suspension.

3. Wash column according to claim 1 or 2, wherein the suspension supply line crosses the filtrate collecting chamber to end in the bed forming chamber.

4. Wash column according to any one of the preceding claims, wherein the end of the suspension supply line in the bed forming chamber comprises a distribution element for further spreading the suspension flowing out of the suspension supply line.

5. Wash column according to any one of the preceding claims, wherein the end of the suspension supply line is positioned approximately centrally in the bed forming chamber.

6. Wash column according to any one of the preceding claims, wherein one suspension supply line is arranged per approximately 0,25 m² to 1 m² cross-section of the bed forming chamber.

7. Wash column according to any one of the preceding claims, wherein the wash column comprises a plurality of filter pipes extending longitudinally over the height of the bed forming chamber arranged approximately parallel to each other.

8. Wash column according to any one of the preceding claims, further comprising means for disintegrating the packed bed.

9. Wash column according to claim 8, wherein the means for disintegrating the packed bed is a rotating knife.

10. Wash column according to any one of the preceding claims, further comprising a dummy pipe supported by the suspension supply line to prevent forming of the bed thereat.

11. Wash column according to any one of the preceding claims, further comprising at least one instrumentation pipe crossing the filtrate collecting chamber ending in the bed forming chamber.

12. A method for processing a suspension of solid particles in liquid in a wash column, comprising supplying the suspension via a suspension supply line that ends directly in a bed forming chamber at an end of the bed forming chamber and extracting liquid from the suspension via filtrate extraction means to form a packed bed of solid particles.
